# EUROPEAN PATENT APPLICATION

(11) **EP 2 596 850 A1**
(43) Date of publication of application: **29.05.2013**
(21) Application number: 12193377.4
(22) Date of filing: 20.11.2012
(51) Int. Cl.: B01D 53/18

(54) **Solvent loading system**

(30) Priority: 28.11.2011 US 201161564179 P
(71) Applicant: ConocoPhillips Company, Houston, Texas 77079 (US)
(72) Inventor: The designation of the inventor has not yet been filed
(74) Representative: Simpson, Paul Christopher

(57) **Abstract**

Embodiments relate to methods and systems for loading a liquid solvent with a gas. Upon spraying the solvent into contact with the gas, droplets of the solvent absorb the gas and coalesce as a partial loaded solution. The solution then passes along at least one wetted wall column disposed in contact with the gas for further loading of the solvent. One exemplary application utilizes an amine as the solvent to be loaded with the gas, such as carbon dioxide.

## Description

Embodiments of the invention relate to systems for loading a liquid solvent with a gas.

Many processes enable loading liquid solvents with a gas. Applications for such processes include removal of carbon dioxide from a gaseous mixture by contacting the gaseous mixture with amines. In contrast to commercial approaches that often utilize packed columns to achieve this contacting, lab scale experiments rely on techniques such as bubbling the gas in the solvent.

Factors including cost and loading time limit desirability of past commercial and lab scale systems for solvent loading. Experiments often desire to saturate the solvent. However, saturation of the solvent takes days to achieve in some instances.

When the experiments use the amine to absorb the carbon dioxide, a solution of the amine increases in viscosity as the amine reacts with the carbon dioxide. This viscosity increase while the carbon dioxide is bubbled in the solution inhibits loading by limiting diffusion of the carbon dioxide into the solution. The viscosity change also creates inconsistent bubble sizes making loading rate measurements difficult.

Commercial applications often require treatment of significant gas feed volumes impacting tower size and costs. Additional pressurization of the gas feed that is needed in some approaches further contributes to overall expense. These factors make recovery of carbon dioxide from streams such as flue gas uneconomical.

Therefore, a need exists for systems that enable efficient loading of liquid solvents with a gas.

For one embodiment, a method of loading a liquid solvent includes spraying the solvent into contact with a gas stream to absorb a constituent of the gas stream into droplets of the liquid solvent. The method further includes passing a coalesced solution recovered from the spraying to a wetted wall column disposed in contact with more of the constituent of the gas stream. The wetted wall column thereby further loads the solvent.

According to one embodiment, a system for loading a liquid solvent includes a reactor coupled to a gas stream that includes a reactive constituent. A nozzle couples to the solvent and is directed to spray droplets of the solvent into contact with the gas stream inside the reactor to absorb the constituent of the gas stream into the liquid solvent. In addition, the system includes a wetted wall column in fluid communication with both a solution of the droplets coalesced at a bottom of the reactor and more of the constituent of the gas stream for further loading of the solvent.

In one embodiment, a method of loading a liquid solvent includes spraying an amine into contact with carbon dioxide that absorbs into droplets of the amine for an initial partial loading of the amine. Passing a coalesced solution recovered from the spraying along an array of wetted wall columns having exterior surfaces disposed in an atmosphere with more of the carbon dioxide further loads the amine by recycling the solution to flow through inner bores of the columns, exit outlets of the columns and flow down along the exterior surfaces of the columns multiple times. Controlling flow through each of the columns maintains balanced flow rates through the outlets of the columns as the solution is recycled and becomes more viscous.

A more complete understanding of the present invention and benefits thereof may be acquired by referring to the follow description taken in conjunction with the accompanying drawings.

Figure 1 is a schematic diagram of a spray absorber with a preloaded solution output coupled to an input of a wetted wall column absorber, according to one embodiment of the invention.

Figure 2 is a schematic diagram of a single reactor for solvent loading by spray contact combined with an array of wetted wall columns, according to one embodiment of the invention.

Turning now to the detailed description of the preferred arrangement or arrangements of the present invention, it should be understood that the inventive features and concepts may be manifested in other arrangements and that the scope of the invention is not limited to the embodiments described or illustrated. The scope of the invention is intended only to be limited by the scope of the claims that issue.

Methods and systems relate to loading of a liquid solvent with a gas. Upon spraying the solvent into contact with the gas, droplets of the solvent absorb the gas and coalesce as a partial loaded solution. The solution then passes along at least one wetted wall column disposed in contact with the gas for further loading of the solvent. One exemplary application utilizes an amine as the solvent to be loaded with the gas, such as pure carbon dioxide or carbon dioxide in flue gas. While described herein using this solvent and gas combination, any other combinations may employ embodiments of the invention.

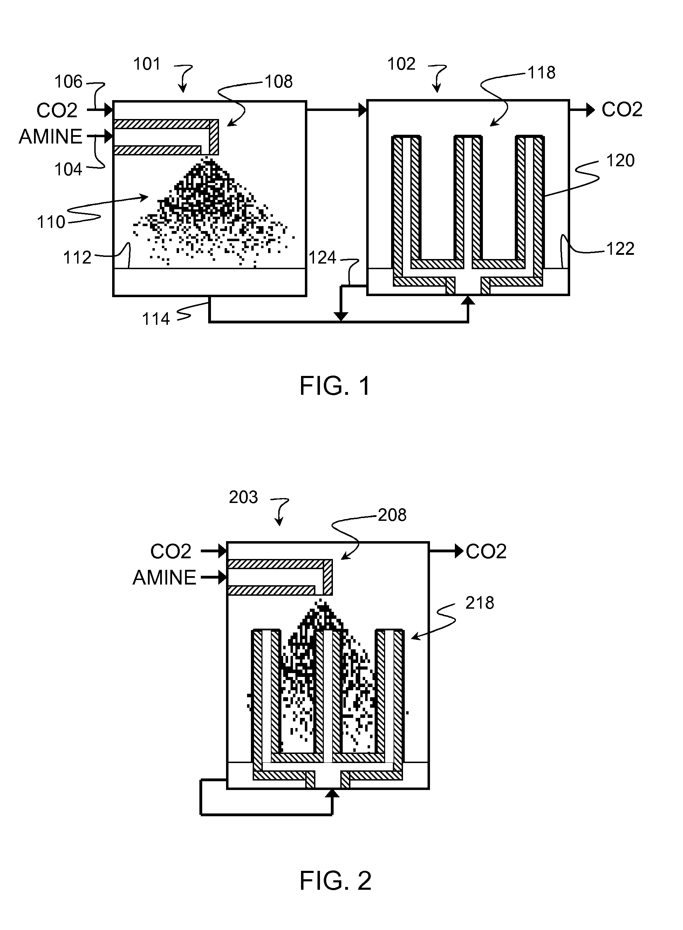

Figure 1 shows a first absorber 101 and a second absorber 102 coupled for efficient loading of a solvent, such as an amine 104, with a gas, such as carbon dioxide 106. In operation, the amine 104 enters an enclosed volume of the first absorber 101 through at least one nozzle assembly 108 that disperses the amine 104 into a spray of droplets 110. Flow of the carbon dioxide 106 also passes through the enclosed volume of the first absorber 101 providing an atmosphere filled with the carbon dioxide 106 into which the droplets 110 fall.

As the droplets 110 fall through the first absorber 101, the amine 104 that forms the droplets 110 reacts with the carbon dioxide 106. Controlling partial pressure of the carbon dioxide 106 and temperature inside the first absorber 101 ensures that conditions support this reaction of the amine 104 and the carbon dioxide 106. Time required for loading the amine 104 decreases as total surface area of the amine 104 in contact with the carbon dioxide 106 increases. The total surface area of the amine 104 in contact with the carbon dioxide 106 depends on dispersion of the amine 104 by the nozzle assembly 108 given that each droplet surface area combines to provide the total surface area. The dispersion of the amine 104 into the droplets 110 by the nozzle assembly 108 thereby limits the time required for loading the amine 104.

The droplets 110 of the amine 104 then coalesce at a bottom of the enclosed volume of the first absorber 101 to provide a pooled solution 112. For some embodiments, the solution 112 recycles back through the nozzle assembly 108 for additional contact with the carbon dioxide 106 in the first absorber 101. Ability to recycle the solution 112 through the nozzle assembly 108 may depend on viscosity increase of the solution 112 due to loading of the carbon dioxide 106. The viscosity increase beyond a threshold makes the solution 112 unsuited for passing through the nozzle assembly 108. However, the solution 112 may still remain unsaturated or loaded with the carbon dioxide 106 to a level less than desired.

For further loading of the amine 104 in the solution 112, a stream 114 of the solution 112 outputs from a bottom of the first absorber 101 and is pumped to the second absorber 102. The second absorber 102 contains one or more wetted wall columns 118 disposed in an atmosphere with more of the carbon dioxide 106, which may flow from the first absorber 101, from another source or in reverse to the first absorber 101 after flowing through the second absorber 102. The second absorber 102 thus relies on the wetted wall columns 118 being in fluid communication with both the solution 112 recovered in the first absorber 101 and the carbon dioxide 106.

In particular, the stream 114 upon being introduced into the second absorber 102 falls in a layer downward along each of the columns 118 to achieve desired surface area contact with the carbon dioxide 106. Controlling partial pressure of the carbon dioxide 106 and temperature inside the second absorber 102 provides suitable conditions for the amine 104 and the carbon dioxide 106 to react when contacted with one another. A loaded liquid product 122 flows off of the wetted wall columns 118 and collects in a bottom of the second absorber 102.

In some embodiments, the wetted wall columns 118 extend in a vertical direction within the second absorber 102 and have exterior surfaces 120 disposed in the atmosphere of the carbon dioxide 106. Figure 1 illustrates three of the columns 118 spaced in a horizontal direction from one another. The solution 112 recovered in the first absorber 101 rises through inner bores within each of the columns, exits outlets at tops of the columns and "wets" the columns 118 by flowing down along the exterior surfaces 120 of the columns 118.

Utilizing many of the columns 118 provides the desired surface area contact with efficient space use. While the surface area contact per unit time corresponds to theoretical column size for single column contactors, practical limits on column height or diameter exist due to such factors as liquid contact breaking away as the column height increases. Number of the columns 118 used thus dictates amount of loading for a single pass of the stream 114 from the first reactor 101 down the columns 118 and may be based on achieving the desired loading within a given number of product recycles down the columns 118.

The product 122 that flows off of the wetted wall columns 118 contains the amine 104 loaded to a desired carbon dioxide level, such as saturated with the carbon dioxide 106. For some embodiments, a recycle flow loop 124 passes the liquid product 122 taken from the wetted wall columns 118 back along the wetted wall columns 118 for still further loading of the amine 104 within the liquid product 122. The product 122 may pass multiple times along the wetted wall columns 118 until the amine 104 is saturated.

Changes in viscosity of the product 122 if passed multiple times through the recycle flow loop 124 along with fluid input distance variances to each of the columns 118 can cause flow inconsistency. Accuracy of certain experimental measurements rely limiting such inconsistency. For some embodiments, valves adjust flow through the inner bores within each of the columns 118 for controlling consistent and equivalent liquid flow along each of the columns 118.

The first and second absorber 101, 102 allow for making reproducible measurements of loading rates since the total contact surface area is known and not in constant flux. Manufacturers of the nozzle assemblies 108 provide information regarding spray characteristics and mean droplet size such that the contact surface area in the first absorber 101 can be calculated. The exterior surfaces 120 of the wetted wall columns 118 define the contact surface area that is also thus determinable in the second absorber 102.

Figure 2 illustrates a single reactor 203 for solvent loading. The reactor 203 employs contact using both spray from a nozzle assembly 208 and an array of wetted wall columns 218 collocated inside an enclosed volume of the reactor 203 containing an atmosphere of carbon dioxide. Other than this collocation, the single reactor 203 operates in a manner analogous to that described with respect to the first and second absorbers 101, 102 shown in Figure 1 coupled in series.

Some embodiments employ either the first absorber 101 or the second absorber 102 alone or in combination with other types of absorption reactors. Embodiments described herein provide space and time efficient loading of the amine and/or recovery of the carbon dioxide. The wetted wall column enables effective contact even if the amine becomes viscous during loading and hence not suitable for continued spraying. Given this limited influence of viscosity, the solution does not require heating and may remain unheated as passed along the wetted wall column. By contrast, lowering viscosity of the amine by heating the amine may facilitate such loading methods as the spraying or bubbling of the carbon dioxide into contact with the amine. However, such heating of the amine inhibits absorption and tends to release the carbon dioxide from the amine.

Methods and systems described herein provide utility for amine loading useful in lab applications and carbon dioxide recovery from mixed gas streams. For example, experimental tests may utilize the product 122 in order to determine heat of reaction to release the carbon dioxide. In commercial applications, regenerating the product 122 enables recycling of lean amine back through the nozzle assembly 108 of the first absorber 101 1 for continued carbon dioxide recovery.

In closing, it should be noted that the discussion of any reference is not an admission that it is prior art to the present invention, especially any reference that may have a publication date after the priority date of this application. At the same time, each and every claim below is hereby incorporated into this detailed description or specification as an additional embodiment of the present invention.

Although the systems and processes described herein have been described in detail, it should be understood that various changes, substitutions, and alterations can be made without departing from the spirit and scope of the invention as defined by the following claims. Those skilled in the art may be able to study the preferred embodiments and identify other ways to practice the invention that are not exactly as described herein. It is the intent of the inventors that variations and equivalents of the invention are within the scope of the claims and the description, abstract and drawings are not to be used to limit the scope of the invention. The invention is specifically intended to be as broad as the claims below and their equivalents.

## Claims

1. A method, comprising:
spraying a liquid solvent, e.g. an amine, into contact with a gas stream, e.g. a flue gas, to absorb a constituent, e.g. carbon dioxide, of the gas stream into droplets of the liquid solvent; and
passing a coalesced solution recovered from the spraying to a wetted wall column disposed in contact with more of the constituent of the gas stream for further loading of the solvent, optionally wherein the solution is passed multiple times along the wetted wall column until the solvent is saturated with the constituent.

2. The method of claim 1, wherein the wetted wall column is part of an array formed of multiple wetted wall columns along which the solution passes, for example by controlling valves to each of the columns.

3. The method of claim 1 or claim 2, wherein the gas stream contacts the droplets from the spraying before contacting the wetted wall column.

4. The method of any preceding claim, wherein the gas stream passes through a single reactor that contains the spraying within where the wetted wall column is disposed (e.g. within a substantially enclosed space within which the wetted wall column is disposed) such that the gas stream contacts the droplets from the spraying and the wetted wall column together.

5. The method of claim any preceding claim, further comprising calculating loading rate of the solvent based on total surface area of the droplets and the wetted wall column.

6. The method of claim any preceding claim, wherein the gas stream is more than 90% by weight carbon dioxide, such as more than 95% by weight carbon dioxide, e.g. more than 99% by weight carbon dioxide or substantially pure carbon dioxide, which is the constituent.

7. A system, comprising:
a reactor coupled to a gas stream, e.g. a flue gas, that includes a reactive constituent, e.g. carbon dioxide;
a nozzle coupled to a liquid solvent, e.g. an amine, and directed to spray droplets of the solvent into contact with the gas stream inside the reactor to absorb the constituent of the gas stream into the liquid solvent; and
a wetted wall column in fluid communication with both a solution of the droplets coalesced at a bottom of the reactor and more of the constituent of the gas stream for further loading of the solvent.

8. The system of claim 7, wherein the wetted wall column is part of an array of multiple wetted wall columns defining a flow path along which the solution is passed.

9. The system of claim 7 or 8, wherein the nozzle and wetted wall column are disposed such that the gas stream contacts the droplets before contacting the wetted wall column.

10. The system of claim 7, 8 or 9, wherein the reactor contains the droplets within where the wetted wall column is disposed (e.g. within a substantially enclosed space within which the wetted wall column is disposed) such that the gas stream contacts the droplets and the wetted wall column together.

11. The system of any of claims 7 to 10, wherein a recycle flow loop is coupled to pass the solution multiples times along the wetted wall column.

12. The system of any of claims 7 to 11, wherein the wetted wall column is part of an array having multiple wetted wall columns along which the solution flow path is defined by inner bores of the columns in fluid communication with outlets disposed such that the flow path continues down along exterior surfaces of the columns.

13. The system of claim 7, wherein the gas stream is more than 90% by weight carbon dioxide, such as more than 95% by weight carbon dioxide, e.g. more than 99% by weight carbon dioxide or substantially pure carbon dioxide, which is the constituent.

14. The method of claim 1, wherein the solvent is an amine and the constituent is carbon dioxide and wherein spraying the amine into contact with the carbon dioxide results in the carbon dioxide being absorbed into droplets of the amine for an initial partial loading of the amine; and wherein the coalesced solution is passed along an array of wetted wall columns having exterior surfaces disposed in an atmosphere with more of the carbon dioxide, wherein the solution is recycled to flow through inner bores of the columns, exit outlets of the columns and flow down along the exterior surfaces of the columns multiple times for further loading of the amine; and
controlling flow through each of the columns to maintain balanced flow rates through the outlets of the columns as the solution is recycled and becomes more viscous.

15. A method, comprising:
spraying an amine into contact with carbon dioxide that absorbs into droplets of the amine for an initial partial loading of the amine;
passing a coalesced solution recovered from the spraying along an array of wetted wall columns having exterior surfaces disposed in an atmosphere with more of the carbon dioxide, wherein the solution is recycled to flow through inner bores of the columns, exit outlets of the columns and flow down along the exterior surfaces of the columns multiple times for further loading of the amine; and
controlling flow through each of the columns to maintain balanced flow rates through the outlets of the columns as the solution is recycled and becomes more viscous.
